# EUROPÄISCHE PATENTSCHRIFT

(11) **EP 1 514 047 B1**
(45) Veröffentlichungstag und Bekanntmachung des Hinweises auf die Patenterteilung: **25.10.2006**
(21) Anmeldenummer: 03757020.7
(22) Anmeldetag: 04.06.2003
(51) Int. Cl.: F16L 27/08

(54) **DREHDURCHFÜHRUNG**
ROTARY FEEDTHROUGH
PASSAGE TOURNANT

(30) Priorität: 07.06.2002 DE 10225272
(43) Veröffentlichungstag der Anmeldung: 16.03.2005
(73) Patentinhaber: OTT-JAKOB GmbH & Co. Spanntechnik KG, 87663 Lengenwang (DE)
(72) Erfinder: JAKOB, Ludwig, 63839 KLEINWALLSTADT (DE); GREIF, Josef, 87654 FRIESENRIED (DE); BECHTELER, Wolfgang, 87640 BIESSENHOFEN (DE)
(74) Vertreter: Schwarz, Thomas
(86) Internationale Anmeldenummer: PCT/EP2003/005881
(87) Internationale Veröffentlichungsnummer: WO 2003/104707

(56) Entgegenhaltungen:
- DE-A- 3 810 060
- DE-A- 19 932 355

## Beschreibung

Die Erfindung betrifft eine Drehdurchführung nach dem Oberbegriff des Anspruchs 1.

Derartige Drehdurchführungen werden für die Zuführung eines Fluids zu einem rotierenden Maschinenteil eingesetzt. Besonders bei Werkzeugmaschinen wird über eine solche Drehdurchführung ein Kühlschmiermittel in eine hohle Arbeitsspindel der Werkzeugmaschine zur Kühlung oder Reinigung der Werkzeuge und/oder der Bearbeitungsstelle eingespeist. Bei den üblichen Drehdurchführungen wird die Schnittstelle zwischen dem rotierenden und dem stehenden Teil durch Dichtungsbuchsen oder Dichtungsringe mit aufeinander gleitenden Dichtflächen gebildet. Bei der Zuführung eines schmierfähigen Mediums, wie z.B. Kühlschmiermittel, wird der Dichtungsspalt zwischen den beiden Gleitflächen geschmiert, wodurch eine zu hohe Temperaturbelastung und ein zu starker Verschleiß verhindert wird. Es gibt allerdings auch Anwendungsfälle, bei denen ein nicht schmierfähiges Medium zugeführt werden muß. So ist bei bestimmten Anwendungen z.B. eine Druckluftzufuhr für die Kühlung des Werkzeugs und/oder Werkstücks oder auch für die Entfernung der Späne erforderlich. Dabei ergibt sich allerdings die Problematik, daß die dann fehlende Schmierung an den Gleitflächen zu einer verstärkten Wärmeentwicklung und erhöhtem Verschleiß führt.

Aus der DE 199 32 355 A1 ist eine gattungsgemäße Drehdurchführung für wechselnde Medien bekannt. Dort stehen die Dichtflächen jedoch nur in Kontakt, wenn ein schmierfähiges Medium zugeführt wird. Bei der Zuführung eines nicht schmierfähigen Mediums werden die Dichtflächen auseinander bewegt, um einen zu starken Verschleiß der Dichtflächen zu verhindern. Um die dadurch entstehenden Leckverluste zu minimieren wird eine zusätzliche zylindrische Dichtung in Form eines Dichtspaltes zwischen der Außenwand einer drehfesten Hülse und der Innenwand einer Hohlwelle vorgesehen.

Bei einer anderen Art von Drehdurchführungen wird das Problem der Schmierung und Kühlung der Gleitflächen dadurch gelöst, daß den aufeinander gleitenden Dichtelementen von außen her ein zusätzliches Kühl- oder Schmiermittel zugeführt wird. Dies erfordert jedoch einen nicht unerheblichen konstruktiven Aufwand, da das zusätzliche Kühl- und Schmiermittel zur kontinuierlichen Abführung der Reibungswärme ständig zu- und abgeführt werden muß.

Aufgabe der Erfindung ist es, eine Drehdurchführung der eingangs genannten Art zu schaffen, die einfacher aufgebaut ist und neben einem geringen Verschleiß auch geringere Leckverluste sowohl bei der Zuführung von Kühlschmierstoffen als auch bei der Zuführung von Druckluft aufweist.

Diese Aufgabe wird durch eine Drehdurchführung mit den Merkmalen des Anspruchs 1 gelöst. Zweckmäßige Ausgestaltungen und vorteilhafte Weiterbildungen der Erfindung sind in den Unteransprüchen angegeben.

Bei der erfindungsgemäßen Drehdurchführung stehen die Gleitflächen auch in Kontakt, wenn die Zuführung des Kühlschmierstoffs oder der Druckluft abgeschaltet wird. Dadurch kann verhindert werden, daß beim Abschalten der Kühlschmierstoffzuführung ein Spalt zwischen den Gleitflächen entsteht, über den dann noch in der Zufuhrleitung befindlicher Kühlschmierstoff entweichen kann. Die nicht rotierende Gleitbuchse wird in Richtung der Hohlwelle so beaufschlagt, daß deren Gleitfläche ständig an die Gleitfläche der Hohlwelle angedrückt wird. Durch die radiale Einleitung an der Gleitbuchse ergibt sich bei der Zuführung von Druckluft auch keine zusätzliche axiale Belastung, die zu einem stärkeren Andruck der Gleitbuchse an die Gleitfläche der Hohlwelle führt. Nur bei der Zuführung von Kühlschmiermittel wird der Anpreßdruck erhöht, um eine optimale Abdichtung zu erreichen.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Drehdurchführung im Längsschnitt und
- **Figur 2**: die Drehdurchführung mit den Anschlüssen für ein Kühlschmiermittel und für Luft.

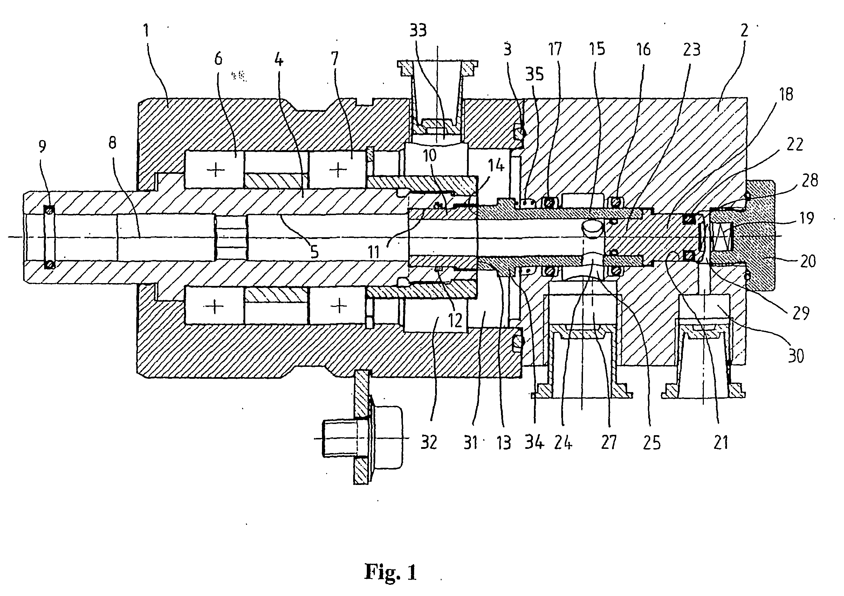

Die in Figur 1 dargestellte Drehdurchführung enthält ein Gehäuse mit einem vorderen Gehäuseteil 1 und einem als Anschlußteil ausgeführten hinteren Gehäuseteil 2, die durch einen Dichtring 3 abgedichtet miteinander verbunden sind. In dem vorderen Gehäuseteil 1 ist eine Hohlwelle 4 mit einem zentralen Durchgangskanal 5 über ein vorderes und hinteres Drehlager 6 bzw. 7 um eine Mittelachse 8 drehbar gelagert ist. An dem vorderen Ende der Hohlwelle 4 ist in den Durchgangskanal 5 z.B. eine hohle Spannstange einer Werkzeugmaschinen-Arbeitsspindel über einen Dichtring 9 abgedichtet einsteckbar. An dem hinteren Ende der Hohlwelle 4 ist eine mit dieser drehfest verbundene und mitrotierende erste Dichtungshülse 10 angeordnet. Diese ist in einen erweiterten Teil 11 des Durchgangskanals 5 am hinteren Ende der Hohlwelle 4 eingesteckt und über eine Radialdichtung 12 abgedichtet. Die Dichtungshülse 10 weist eine hintere stirnseitige Dichtfläche 13 auf, an der eine vordere stirnseitige Dichtfläche 14 einer nicht rotierenden Dichtungsbuchse 15 zur Anlage gelangt. Die Dichtungshülse 10 und die Dichtungsbuchse 15 bestehen aus einem verschleißfesten und temperaturbeständigen Material, zweckmäßigerweise Keramik oder dgl.

Die zur Dichtungshülse 10 koaxiale Dichtungsbuchse 15 ist in dem hinteren Gehäuseteil 2 axial verschiebbar und durch Dichtungen 16 und 17 abgedichtet geführt. An dem hinteren Ende der Dichtungsbuchse 15 ist ein Druckkolben 18 angeordnet, der über eine Druckfeder 19 an einer im Gehäuseteil 2 befestigten Endkappe 20 abgestützt ist. Der Druckkolben 18 ist in einer entsprechenden Bohrung 21 des hinteren Gehäuseteils 2 über eine Dichtung 22 abgedichtet und weist einen in das hintere Ende der Dichtungsbuchse 15 abgedichtet hineinragenden vorderen Endzapfen 23 auf. In der Dichtungsbuchse 15 sind mehrere radiale Öffnungen 24 vorgesehen, die in einen ersten Ringraum 25 innerhalb des Gehäuseteils 2 münden. Die radialen Öffnungen 24 sind derart angeordnet, daß diese vor der vorderen Stirnfläche 26 des Endzapfens 23 des Druckkolbens 18 liegen. Zu dem Ringraum 25 führt ein im Gehäuseteil 2 radial verlaufender erster Zufuhrkanal 27.

Zwischen der hinteren Stirnfläche 28 des Druckkolbens 18 und der Endkappe 20 ist ein zweiter Ringraum 29 vorgesehen, zu dem ein zweiter radialer Zufuhrkanal 30 führt. Dieser ist neben dem ersten Zufuhrkanal 27 radial verlaufend im Gehäuseteil 2 angeordnet.

Im Bereich der Schnittstelle zwischen der Dichtfläche 13 der rotierenden Dichtungshülse 10 und der Dichtfläche 14 der drehfesten Dichtungsbuchse 15 ist innerhalb des Gehäuseteils 1 ein Auffangraum 31 und ein mit diesem verbundener Ringraum 32 mit einer radialen Abführleitung 33 vorgesehen. Über die Abführleitung 33 kann das an der Schnittstelle zwischen der rotierenden Dichtungsbuchse 10 und der drehfesten Dichtungsbuchse 15 austretende und im Auffangraum 31 gesammelte Leckagefluid abgeführt werden. Zwischen einem Ringbund 34 der Dichtungsbuchse 15 und dem Gehäuseteil 2 ist eine Druckfeder 35 eingespannt, durch welche die Dichtungsbuchse 15 so in Richtung der Hohlwelle 14 beaufschlagt wird, daß die Dichtungsbuchse 15 mit ihrer Dichtfläche 14 ständig an die Dichtfläche 13 der Dichtungshülse 10 angedrückt wird.

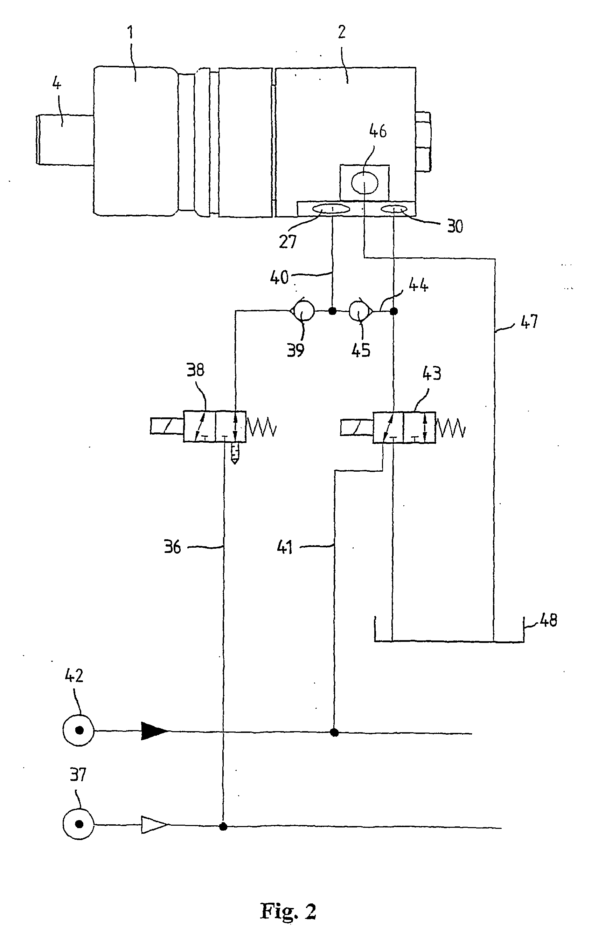

Wie aus Figur 2 hervorgeht, sind die beiden Zufuhrkanäle 27 und 30 an eine dort schematisch dargestellte Versorgungseinrichtung angeschlossen. Diese umfaßt eine Druckluft-Versorgungsleitung 36, die von einer Druckluftquelle 37 über ein erstes Schaltventil 38 und ein erstes Rückschlagventil 39 zu einer an den ersten Zufuhrkanal 27 angeschlossenen Leitung 40 führt. Die Versorgungseinrichtung enthält außerdem eine Kühlschmierstoff-Versorgungsleitung 41, die von einer Kühlschmierstoffquelle 42 über ein zweites Schaltventil 43 zu dem zweiten Zufuhrkanal 30 und außerdem über eine Abzweigung 44 mit einem zweiten Rückschlagventil 45 in die Leitung 40 stromabwärts des ersten Rückschlagventils 39 mündet. Die beiden in Figur 2 außerhalb des Gehäuses dargestellten Rückschlagventile 39 und 45 können auch in dem hinteren Gehäuseteil 2 integriert sein. In dem hinteren Gehäuseteil 2 ist außerdem eine radiale Öffnung 46 vorgesehen, die zu einem zwischen den Dichtungen 16 und 22 angeordneten Zwischenraum führt. Dadurch kann ein sich zwischen den Dichtungen 16 und 22 sammelndes Leckagefluid zur Entlastung über eine Leitung 47 in einen Sammelbehälter 48 abgeführt werden.

Bei der in Figur 2 gezeigten Schaltstellung ist das erste Schaltventil 38 geschlossen und das zweite Schaltventil 43 betätigt, so daß der Kühlschmierstoff den beiden Zufuhrkanälen 27 und 30 zugeführt wird. Durch die Zuführung des Kühlschmierstoffs zum Zufuhrkanal 30 wird der Anpreßdruck zwischen den Dichtflächen 13 und 14 erhöht, wodurch eine Leckage des über die Leitung 40 zugeführten Schmierstoffs an der Schnittstelle zwischen der Gleithülse 10 und der Gleitbuchse 15 verringert wird. Bei der Zuführung von Druckluft wird dagegen der Zufuhrkanal 30 entlüftet, so daß der Anpreßdruck gesenkt und somit ein zu starker Verschleiß an den Dichtflächen 13 und 14 verhindert wird.

## Patentansprüche

1. Drehdurchführung für die wahlweise Zuführung von Kühlschmiermittel oder Luft zu einem rotierenden Maschinenteil, die eine in einem ersten Gehäuseteil (1) drehbar gelagerte Hohlwelle (4) mit einer ersten Dichtfläche (13) und eine innerhalb eines zweiten Gehäuseteils (2) verdrehfest angeordnete, zu der Hohlwelle (4) koaxiale Dichtungsbuchse (15) mit einer zweiten Dichtfläche (14) zur Anlage an der ersten Dichtfläche (13) enthält, **dadurch gekennzeichnet, daß** das zweite Gehäuseteil (2) einen an eine Kühlmittelversorgungsleitung (41) oder eine Druckluftversorgungsleitung (36) anschließbaren ersten seitlichen Zufuhrkanal (27) für die Zuführung des Kühlschmiermittels oder der Druckluft über mindestens eine radiale Öffnung (24) der Dichtungsbuchse (15) und einen bei der Zuführung des Kühlschmiermittels beaufschlagten zweiten Zufuhrkanal (30) für die Zuführung des Kühlschmiermittels an einen das hintere Ende der Dichtungsbuchse (15) verschließenden Druckkolben (18) zur Erhöhung des Anpreßdrucks der Dichtflächen (13, 14) enthält.

2. Drehdurchführung nach Anspruch 1, **dadurch gekennzeichnet, daß** die Dichtungsbuchse (15) durch eine am zweiten Gehäuseteil (2) abgestützte Druckfeder (35) in Richtung der Hohlwelle (4) derart beaufschlagt wird, daß die Dichtfläche (14) der Dichtungsbuchse (15) ständig an die Dichtfläche (13) der Hohlwelle (4) angedrückt wird.

3. Drehdurchführung nach Anspruch 1 oder 2, **dadurch gekennzeichnet, daß** die erste Dichtfläche (13) an einer am hinteren Ende der Hohlwelle (4) eingesetzten Dichtungshülse (10) vorgesehen ist.

4. Drehdurchführung nach einem der Ansprüche 1 bis 3, **dadurch gekennzeichnet, daß** der Druckkolben (18) in das hintere Ende der Dichtungsbuchse (15) eingesetzt ist.

5. Drehdurchführung nach einem der Ansprüche 1 bis 4, **dadurch gekennzeichnet, daß** der Druckkolben (18) einen in das hintere Ende der Dichtungsbuchse (15) abgedichtet hineinragenden vorderen Endzapfen (23) aufweist.

6. Drehdurchführung nach einem der Ansprüche 1 bis 5, **dadurch gekennzeichnet, daß** der Druckkolben (18) über eine Druckfeder (19) an einer im zweiten Gehäuseteil (2) befestigten hinteren Endkappe (20) abgestützt ist.

7. Drehdurchführung nach einem der Ansprüche 1 bis 6, **dadurch gekennzeichnet, daß** im Bereich der Schnittstelle zwischen den Dichtflächen (13, 14) der Hohlwelle (4) und der Dichtungsbuchse (15) innerhalb des ersten Gehäuseteils (1) ein Auffangraum (31) und ein mit diesem verbundener Ringraum (32) mit einer Abführleitung (33) vorgesehen ist.

8. Drehdurchführung nach einem der Ansprüche 1 bis 7 **dadurch gekennzeichnet, daß** die beiden Zufuhrkanäle (27, 30) an eine Versorgungseinrichtung (36, 37, 41, 42) für die Druckluft- und Kühlschmiennittelversorgung angeschlossen sind.

9. Drehdurchführung nach Anspruch 8, **dadurch gekennzeichnet, daß** die Versorgungseinrichtung (36, 37, 41, 42) eine Druckluft-Versorgungsleitung (36) enthält, die von einer Druckluftquelle (37) über ein erstes Schaltventil (38) und ein erstes Rückschlagventil (39) zu einer an den ersten Zufuhrkanal (27) angeschlossenen Leitung (40) führt.

10. Drehdurchführung nach Anspruch 9, **dadurch gekennzeichnet, daß** die Versorgungseinrichtung (36, 37, 41, 42) eine Kühlschmierstoff-Versorgungsleitung (41) enthält, die von einer Kühlschmierstoffquelle (42) über ein zweites Schaltventil (43) zu dem zweiten Zufuhrkanal (30) und über eine Abzweigung (44) mit einem zweiten Rückschlagventil (45) in die Leitung (40) stromabwärts des ersten Rückschlagventils (39) mündet.

11. Drehdurchführung nach Anspruch 9, **dadurch gekennzeichnet, daß** das erste Rückschlagventil (39) in dem zweiten Gehäuseteil (2) integriert ist.

12. Drehdurchführung nach Anspruch 10 oder 11, **dadurch gekennzeichnet, daß** das zweite Rückschlagventil (45) in dem zweiten Gehäuseteil (2) integriert ist.

## Claims

1. Rotary feedthrough for selectively supplying cooling lubricant or air to a rotating machine part and which comprises a hollow shaft (4) with a first sealing face (13) mounted rotatably in a first housing part (1) and a sealing bush (15) with a second sealing face (14) which is arranged so that it cannot turn inside a second housing part (2) and coaxial with the hollow shaft (4) for bearing on the first sealing face (13), **characterised in that** the second housing part (2) comprises a first side feed channel (27) which can be connected to a coolant supply line (41) or a compressed air supply line (36) to supply the cooling lubricant or the compressed air through at least one radial opening (24) in the sealing bush (15) and a second feed channel (30) which is actuated when the cooling lubricant is being fed to feed the cooling lubricant to a pressure piston (18) closing the rear end of the sealing bush (15) to increase the contact pressure of the sealing faces (13, 14).

2. Rotary feedthrough according to claim 1, **characterised in that** the sealing bush (15) is pressed in the direction of the hollow shaft (4) by a compression spring (35) supported on the second housing part (2) in such a way that the sealing face (14) of the sealing bush (15) is continuously pressed against the sealing face (13) of the hollow shaft (4).

3. Rotary feedthrough according to claim 1 or 2, **characterised in that** the first sealing face (13) is provided on a sealing sleeve (10) which is inserted at the rear end of the hollow shaft (4).

4. Rotary feedthrough according to one of claims 1 to 3, **characterised in that** the pressure piston (18) is inserted in the rear end of the sealing bush (15).

5. Rotary feedthrough according to one of claims 1 to 4, **characterised in that** the pressure piston (18) exhibits a front end spigot (23) which extends sealingly into the rear end of the sealing bush (15).

6. Rotary feedthough according to one of claims 1 to 5, **characterised in that** the pressure piston (18) is supported by means of a compression spring (19) on a rear end cap (20) fastened in the second housing part (2).

7. Rotary feedthrough according to one of claims 1 to 6, **characterised in that** a collecting chamber (31) and an annular chamber (32) connected to the latter and provided with a discharge line (33) is provided in the area of the interface between the sealing faces (13, 14) of the hollow shaft (4) and the sealing bush (15) inside the first housing part (1).

8. Rotary feedthrough according one of claims 1 to 7, **characterised in that** the two feed channels (27, 30) are connected to a supply device (36, 37, 41, 42) for the supply of compressed air and cooling lubricant.

9. Rotary feedthrough according to claim 8, **characterised in that** the supply device (36, 37, 41, 42) comprises a compressed air supply line (36) which runs from a compressed air source (37) through a first switching valve (38) and a first non-return valve (39) to a line (40) connected to the first feed channel (27).

10. Rotary feedthrough according to claim 9, **characterised in that** the supply device (36, 37, 41, 42) comprises a cooling lubricant supply line (41) which runs from a cooling lubricant source (42) through a second switching valve (43) to the second feed channel (30) and through a branch (44) with a second non-return valve (45) into the line (40) downstream of the first non-return valve (39).

11. Rotary feedthrough according to claim 9, **characterised in that** the first non-return valve (39) is incorporated in the second housing part (2).

12. Rotary feedthrough according to claim 10 or 11, **characterised in that** the second non-return valve (45) is incorporated in the second housing part (2).

## Revendications

1. Passage tournant pour l'amenée facultative de réfrigérant lubrifiant ou air à une pièce mécanique rotative, qui contient dans une première partie de logement (1) un arbre creux (4) placé de façon à pouvoir tourner avec une première surface étanche (13) et une douille d'étanchéité (15) coaxiale par rapport à l'arbre creux (4), placée de façon à résister à la torsion dans une seconde partie de logement (2) avec une seconde surface étanche (14) destinée à prendre appui sur la première surface étanche (13), **caractérisé en ce que** la seconde partie de logement (2) contient un premier canal d'alimentation (27) latéral pouvant être raccordé à une conduite d'alimentation en réfrigérant lubrifiant (41) ou à une conduite d'alimentation en air comprimé (36) pour l'introduction du réfrigérant lubrifiant ou de l'air comprimé par au moins une ouverture radiale (24) de la douille d'étanchéité (15) et un second canal d'alimentation (30) alimenté lors de l'introduction du réfrigérant lubrifiant pour l'introduction du réfrigérant lubrifiant au niveau d'un piston de compression (18) fermant l'extrémité arrière de la douille d'étanchéité (15) pour augmenter la pression d'appui des surfaces d'étanchéité (13, 14).

2. Passage tournant selon la revendication 1, **caractérisé en ce que** la douille d'étanchéité (15) est chargée par un ressort de pression (35) supporté au niveau de la seconde partie de logement (2) dans la direction de l'arbre creux (4), de sorte que la surface d'étanchéité (14) de la douille d'étanchéité (15) est pressée de façon permanente contre la surface d'étanchéité (13) de l'arbre creux (4).

3. Passage tournant selon la revendication 1 ou 2, **caractérisé en ce que** la première surface d'étanchéité (13) est prévue au niveau d'une douille d'étanchéité (10) placée à l'extrémité arrière de l'arbre creux (4).

4. Passage tournant selon l'une quelconque des revendications 1 à 3, **caractérisé en ce que** le piston de compression (18) est placé dans l'extrémité arrière de la douille d'étanchéité (15).

5. Passage tournant selon l'une quelconque des revendications 1 à 4, **caractérisé en ce que** le piston de compression (18) comporte un pivot d'extrémité (23) avant saillants de manière étanche dans l'extrémité arrière de la douille d'étanchéité (15).

6. Passage tournant selon l'une quelconque des revendications 1 à 5, **caractérisé en ce que** le piston de compression (18) prend appui par un ressort de pression (19) sur un capuchon d'extrémité (20) arrière fixé dans la seconde partie de logement (2).

7. Passage tournant selon l'une quelconque des revendications 1 à 6, **caractérisé en ce que** dans la région du point d'intersection entre les surfaces d'étanchéité (13, 14) de l'arbre creux (4) et de la douille d'étanchéité (15), à l'intérieur de la première partie de logement (1), sont prévus un réservoir (31) et relié à celui-ci un espace annulaire (32) avec un canal de sortie (33).

8. Passage tournant selon l'une quelconque des revendications 1 à 7, **caractérisé en ce que** les deux canaux d'alimentation (27, 30) sont reliés à un dispositif d'alimentation (36, 37, 41, 42) pour l'alimentation en air et en réfrigérant lubrifiant.

9. Passage tournant selon la revendication 8, **caractérisé en ce que** le dispositif d'alimentation (36, 37, 41, 42) contient un canal d'alimentation en air (36), qui va d'une source d'air comprimé (37), via une première soupape de commande (38) et une première soupape de retenue (39), vers une conduite (40) reliée au premier canal d'alimentation (27).

10. Passage tournant selon la revendication 9, **caractérisé en ce que** le dispositif d'alimentation (36, 37, 41, 42) contient une conduite d'alimentation en réfrigérant lubrifiant (41), qui va d'une source de réfrigérant lubrifiant (42), via une seconde soupape de commande (43) vers le second canal d'alimentation (30) et via un branchement (44) avec une seconde soupape de retenue (45) dans la conduite (40) en aval de la première soupape de retenue (39).

11. Passage tournant selon la revendication 9, **caractérisé en ce que** la première soupape de retenue (39) est intégrée dans la seconde partie de logement (2).

12. Passage tournant selon la revendication 10 ou 11, **caractérisé en ce que** la seconde soupape de retenue (45) est intégrée dans la seconde partie de logement (2).
